# EUROPÄISCHE PATENTSCHRIFT

(11) **EP 0 415 027 B1**
(45) Veröffentlichungstag und Bekanntmachung des Hinweises auf die Patenterteilung: **08.06.1994**
(21) Anmeldenummer: 90112575.7
(22) Anmeldetag: 02.07.1990
(51) Int. Cl.: F16D 13/68

(54) **Gehäuseteil für eine Kupplung**
Casing part for a clutch
Part de cage pour un embrayage

(30) Priorität: 08.07.1989 DE 3922827
(43) Veröffentlichungstag der Anmeldung: 06.03.1991
(73) Patentinhaber: HERZING & SCHROTH GMBH & CO., D-63179 Obertshausen (DE)
(72) Erfinder: Klein, Erwin, D-6054 Rodgau 2 (DE)
(74) Vertreter: Schieferdecker, Lutz, Dipl.-Ing.

(56) Entgegenhaltungen:
- DE-C- 3 321 659
- US-A- 3 841 452
- US-A- 4 010 831

## Beschreibung

Die Erfindung betrifft ein Gehäuseteil aus dünnwandigem Blech für eine Kupplung oder dgl. mit einem Boden, mit einer in sich geschlossenen Gehäusewand, mit achsparallelen Rippen sowie mit Anschlägen zur axialen Fixierung eines Ringes, Sprengringes oder dgl.

Ein Gehäuseteil der genannten Art ist aus der DE-PS 33 21 659 bekannt. Als Anschläge für einen innen einzusetzenden Ring bzw. Sprengring sind die Rippen mit Einschnitten versehen bzw. unterbrochen, so daß Anlageflächen jeweils im Bereich der Rippen vorhanden sind. Unmittelbar neben den Rippen ist eine Abstützung des Sprengringes nicht möglich, da er sich dort im Bereich einer Nut befindet.

Der Erfindung liegt die Aufgabe zugrunde, Maßnahmen vorzusehen, die es gestatten, den Sprengring nicht nur im Bereich der Rippen abzustützen.

Zur Lösung dieser Aufgabe sieht die Erfindung vor daß die Rippen an einem kreis-zylindrischen Wandstück der Gehäusewand angeordnet sind und im Abstand von den Anschlägen enden und daß die Anschläge in dem zylindrischen Wandstück angeordnet sind.

An die Rippen schließt sich zum freien Rand des Gehäuseteiles hin noch ein zylindrisches Wandstück an, das als Träger für die Anschläge dient. Sie sind vorzugsweise aus der zylindrischen Wandflächs herausragende Anschlaglappen und können fluchtend mit den Rippen an jeder beliebigen Stelle und in beliebiger Anzahl vorgesehen sein. Die genaue Beachtung geometrischer Verhältnisse aufgrund der erforderlichen Festigkeit ist dadurch nicht mehr in gleichem Maße notwendig wie bisher und gibt dadurch dem Konstrukteur die Möglichkeit für weitere, zweckmäßige Maßnahmen.

Ferner sieht die Erfindung vor, daß die in sich geschlossene Gehäusewand eine radial gerichtete Ringfläche aufweist und daß die den Anschlägen abgewandten Enden der Rippen an der radial gerichteten Ringfläche enden.

Weitere Merkmale der Erfindung gehen aus der Beschreibung und den Ansprüchen im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: eine perspektivische, abgebrochene Ansicht des Gehäuseteiles;
- Fig. 2:: eine abgebrochene Schnittansicht des Gehäuseteiles gem. Fig. 1;

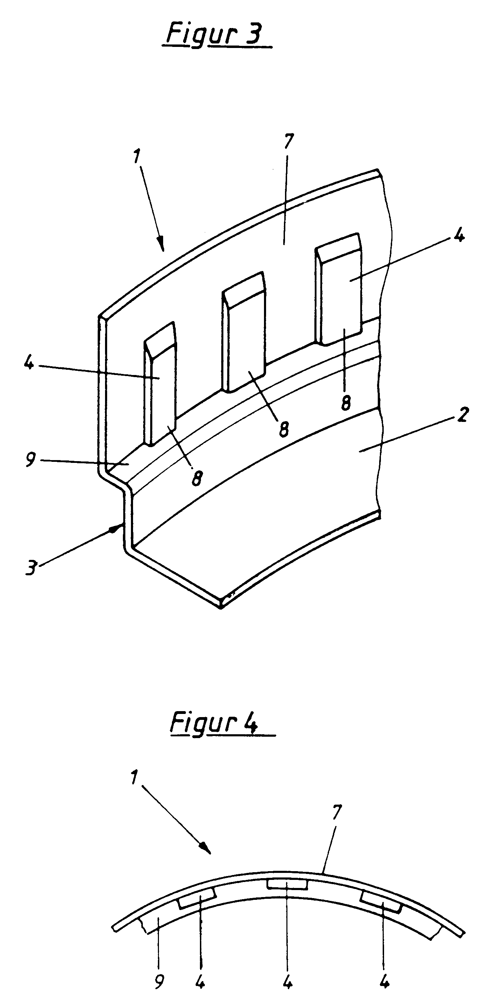

- Fig. 3:: eine perspektivische, abgebrochene Ansicht des Gehäuseteiles vor der Herstellung der Anschläge und
- Fig. 4:: eine Draufsicht auf einen Abschnitt des Gehäusesteiles gem. Fig. 3.

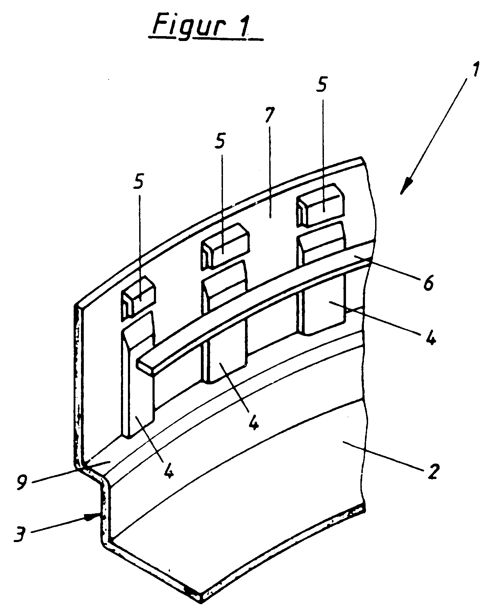

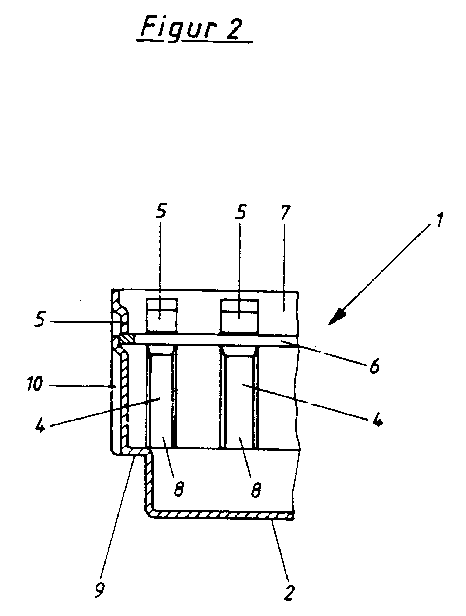

Eine Gehäuseteil 1 aus dünnwandigem Blech für eine Kupplung oder dgl. umfaßt gem. Fig. 1 einen z.B. ringförmigen Boden 2 und eine in sich geschlossene Gehäusewand 3. Die Gehäusewand 3 weist achsparallele, auf Materialversatz beruhende Rippen 4 z.B. zur Fixierung und Lagerung von nicht dargestellten Kupplungslamellen sowie Anschläge 5 zur axialen Fixierung eines z.B. als Halteelement dienenden Ringes bzw. Sprengringes 6 auf. Die Anschläge 5 sind im Abstand von den Rippen 4 in einem zylindrischen Wandstück 7 der in sich geschlossenen Gehäusewand 3 angeordnet bzw. enden im Abstand von diesen. Das zyiindrische Wandstück 7 dient somit als Träger für getrennt vorgesehene Rippen 4 und für Anschläge 5, die z.B. in Form von gegebenenfalls abgewinkelten Anschlaglappen (Fig. 2) von dem zylindrischen Wandstück 7 wegragen.

Wie die Figuren ferner zeigen, gehen die Rippen 4 an ihren den Anschlägen 5 benachbarten Enden allmählich in das zylindrische Wandstück 7 über. Die den Anschlägen 5 abgewandten Enden 8 der Rippen 4 enden an einer als Absatz dienenden, radial gerichteten Ringfläche 9 der in sich geschlossenen Gehäusewand 3.

Gemäß dem in den Figuren dargestellten Ausführungsbeispiel sind die Rippen 4, die Anschläge 5 und die als Absatz dienende, radial gerichtete Ringfläche 9 jeweils radial einwärts gerichtet. Grundsätzlich können die Rippen 4 und die Anschläge 5 aber auch radial auswärts gerichtet sein. Für Sonderfälle ist es schließlich auch möglich, in ein und demselben Gehäuseteil sowohl radial einwärts gerichtete als auch radial auswärts gerichtete Rippen 4 und Anschläge 5 vorzusehen. Da die Rippen 4 jeweils durch Materialversatz gebildet sind, befinden sich entsprechende Nuten 10 im Gehäuseteil 1 (Fig. 2) aussen oder innen in einer fluchtenden Lage mit den bezogen auf das zylindrische Wandstück 7 vorstehenden Rippen 4.

Gemäß dem in Figur 1 dargestellten Ausführungsbeispiel sind die Anschläge 5 in gleichmäßigen Abständen am Umfang des zylindrischen Wandstückes 7 angeordnet und befinden sich jeweils in einer fluchtenden Lage mit den Rippen 4. Bei den Anschlägen 5 handelt es sich vorzugsweise um aus dem zylindrischen Wandstück 7 herausgedrückte Anschlaglappen.

Die Verwendung eines zylindrischen Wandstückes 7 als Träger für die getrennte Anordnung von Rippen 4 und AnSchlägen 5 eröffnet mannigfache Konstruktionsmöglichkeiten und befreit den Konstrukteur von verschiedenen Zwängen, die mit durchlaufenden Rippen 4 verbunden sind. Ferner vereinfacht eine solche Gestaltung die Herstellung.

## Patentansprüche

1. Gehäuseteil aus dünnwandigem Blech für eine Kupplung oder dgl. mit einem Boden (2), mit einer in sich geschlossenen Gehäusewand (3), mit achsparallelen Rippen (4) sowie mit Anschlägen (5) zur axialen Fixierung eines Ringes (6), Sprengringes oder dgl., dadurch gekennzeichnet, daß die Rippen (4) an einem kreis-zylindrischen Wandstück (7) der Gehäusewand (3) angeordnet sind und im Abstand von den Anschlägen (5) enden und daß die Anschläge (5) in dem zylindrischen Wandstück (7) angeordnet sind.

2. Gehäuseteil nach Anspruch 1, dadurch gekennzeichnet, daß die Rippen (4) allmählich in das zylindrische Wandstück (7) übergehen.

3. Gehäuseteil nach Anspruch 1 und 2, dadurch gekennzeichnet, daß die den Anschlägen (5) abgewandten Enden (8) der Rippen (4) an einer radial gerichteten Ringfläche (9) des in sich geschlossenen Wandstückes (7) enden.

4. Gehäuseteil nach einem der vorhergehenden Ansprüche, dadurch gekennzeichnet, daß die Rippen (4), die Anschläge (5) und die radial gerichtete Ringfläche (9) jeweils radial einwärts gerichtet sind.

5. Gehäuseteil nach einem der vorhergehenden Ansprüche, dadurch gekennzeichnet, daß die Rippen (4) und die Anschläge (5) jeweils radial auswärts gerichtet sind.

6. Gehäuseteil nach einem der vorhergehenden Ansprüche, dadurch gekennzeichnet, daß die Anschläge (5) in gleichmäßigen Abständen am Umfang des zylindrischen Wandstückes (7) angeordnet sind und mit den Rippen (4) fluchten.

7. Gehäuseteil nach einem der vorhergehenden Ansprüche, dadurch gekennzeichnet, daß die Anschläge (5) aus dem zylindrischen Wandstück (7) herausgedrückte Anschlaglappen sind.

## Claims

1. A housing part consisting of thin-gauge sheet metal for a clutch or the like with a bottom (2), with a housing wall (3) closed in itself, with axially parallel ribs (4) and with abutments (5) for axial fixing of a ring (6), circlip or the like, characterised in that the ribs (4) are disposed on a circularly cylindrical wall portion (7) and end at a distance from the abutments (5) and in that the abutments (5) are disposed in the cylindrical wall portion (7).

2. A housing part according to Claim 1, characterised in that the ribs (4) gradually merge into the cylindrical wall portion (7).

3. A housing part according to Claim 1 and 2, characterised in that the ends (8) of the ribs (4) which are remote from the abutments (5) end at a radially directed annular surface (9) of the wall portion (7) which is closed in itself.

4. A housing part according to one of the preceding Claims, characterised in that the ribs (4), the abutments (5) and the radially directed annular surface (9) are in each case directed radially inwardly.

5. A housing part according to one of the preceding Claims, characterised in that the ribs (4) and the abutments (5) are in each case directed radially outwardly.

6. A housing part according to one of the preceding Claims, characterised in that the abutments (5) are disposed at regular intervals around the periphery of the cylindrical wall portion (7) and are aligned with the ribs (4).

7. A housing part according to one of the preceding Claims, characterised in that the abutments (5) are abutment lugs pressed out of the cylindrical wall portion (7).

## Revendications

1. Partie de carter en tôle a paroi mince pour accouplement ou similaire présentant un fond (2), une paroi de carter (3) fermée sur elle-même, des nervures (4) parallèles à l'axe et des butées (5) pour la fixation axiale d'un anneau (6), d'une bague d'arrêt ou similaires, caractérisée en ce que les nervures (4) sont disposées contre une portion cylindrique circulaire (7) de la paroi de carter (3) et se terminent à distance des butées (5) et en ce que les butées (5) sont disposées dans la portion cylindrique de paroi (7).

2. Partie de carter selon la revendication 1, caractérisée en ce que les nervures (4) se transforment peu à peu en portion cylindrique de paroi (7).

3. Partie de carter selon les revendications 1 et 2, caractérisée en ce que les extrémités (8) des nervures (4), opposées aux butées (5) se terminent au niveau d'une surface annulaire (9), orientée radialement, de la portion de paroi (7) fermée sur elle-même.

4. Partie de carter selon l'une des revendications précédentes, caractérisée en ce que les nervures (4), les butées (5) et la surface annulaire (9) dirigée radialement sont chacune orientées radialement vers l'intérieur.

5. Partie de carter selon l'une des revendications précédentes, caractérisée en ce que les nervures (4) et les butées (5) sont chacune orientées radialement vers l'extérieur.

6. Partie de carter selon l'une des revendications précédentes, caractérisée en ce que les butées (5) sont disposées à intervalles réguliers sur la périphérie de la portion cylindrique de paroi (7) et sont alignées avec les nervures (4).

7. Partie de carter selon l'une des revendications précédentes, caractérisée en ce que les butées (5) sont des pattes d'arrêt réalisées par pression de la portion cylindrique de paroi (7).
